(19) Europäisches Patentamt

European Patent Office

Office européen des brevets

(11) **EP 4 753 316 A1**

(12) **EUROPEAN PATENT APPLICATION**

(43) Date of publication:
**03.06.2026   Bulletin 2026/23**

(21) Application number: **24383294.6**

(22) Date of filing: **28.11.2024**

(51) International Patent Classification (IPC):
**H04W 24/02** (2009.01)      **H04W 24/10** (2009.01)
**H04W 84/12** (2009.01)      **H04W 88/08** (2009.01)

(52) Cooperative Patent Classification (CPC):
**H04W 24/02; H04L 41/0823; H04L 41/0853;
H04L 41/145; H04L 43/08; H04L 43/50;
H04W 16/22;** H04L 41/16; H04L 41/5067;
H04L 43/16; H04W 16/10; H04W 24/10;
H04W 84/12; H04W 88/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Solutions and Networks Oy
02610 Espoo (FI)**

(72) Inventors:
• **Fernandez Duran, Alfonso**
  **28229 Madrid (ES)**
• **Fortes Rodriguez, Sergio**
  **29006 Malaga (ES)**
• **Pulido Alegre, Jose**
  **29190 Malaga (ES)**

(74) Representative: **Kolster Oy Ab
Salmisaarenaukio 1
P.O. Box 204
00181 Helsinki (FI)**

(54) **DETERMINING ONE OR MORE OPTIMIZED CHANNEL CONFIGURATIONS**

(57)   Disclosed is a method comprising collecting network data from a plurality of access points within a wireless network; selecting, based on the age of the network data, a digital twin approach from at least two pre-defined digital twin approaches for simulating the wireless network; determining one or more optimized channel configurations for the plurality of access points based at least on the network data and the digital twin approach selected; and applying one of the one or more optimized channel configurations to the plurality of access points within the wireless network.

FIG. 1

**Description**

FIELD

The following example embodiments relate to wireless communication.

BACKGROUND

As the demand for high-capacity and reliable wireless connectivity continues to grow, it is desirable to ensure optimal performance of wireless networks.

SUMMARY

The scope of protection sought for various example embodiments is set out by the claims. The example embodiments and features, if any, described in this specification that do not fall under the scope of the claims are to be interpreted as examples useful for understanding various embodiments.

According to a first aspect, there is provided a method comprising: collecting network data from a plurality of access points within a wireless network, wherein the network data comprises at least one of: performance information of the plurality of access points, spatial information indicating a positioning of the plurality of access points, or channel information indicating one or more channels used by the plurality of access points; selecting, based on the age of the network data, a digital twin approach from at least two pre-defined digital twin approaches for simulating the wireless network, wherein the at least two pre-defined digital twin approaches comprise at least: a first digital twin approach for simulating the wireless network using a digital twin that represents the plurality of access points, and a second digital twin approach for simulating the wireless network using multiple digital twin instances that represent the plurality of access points and one or more other access points; determining one or more optimized channel configurations for the plurality of access points based at least on the network data and the digital twin approach selected; and applying one of the one or more optimized channel configurations to the plurality of access points within the wireless network.

According to a second aspect, there is provided the method of the first aspect, wherein the first digital twin approach is selected based on determining that the age of the network data is less than or equal to a threshold value, or wherein the second digital twin approach is selected based on determining that the age of the network data is greater than the threshold value.

According to a third aspect, there is provided the method of the first or second aspect, wherein the one or more optimized channel configurations are determined based further on channel pollution information indicative of: channel interference from one or more neighboring channels on the one or more channels used by the plurality of access points, and channel occupancy measured as signal power observed by at least one of the plurality of access points on the one or more channels.

According to a fourth aspect, there is provided the method of the third aspect, further comprising: collecting the channel pollution information from the plurality of access points; and determining, based on selecting the first digital twin approach, to utilize the channel pollution information collected from the plurality of access points for determining the one or more optimized channel configurations.

According to a fifth aspect, there is provided the method of the third aspect, further comprising: generating, based on selecting the second digital twin approach, the channel pollution information by simulating the wireless network using the multiple digital twin instances that represent the plurality of access points and the one or more other access points.

According to a sixth aspect, there is provided the method of any of the first to fifth aspects, wherein the one or more optimized channel configurations comprise a plurality of optimized channel configurations determined for at least one access point of the plurality of access points based on the second digital twin approach, the plurality of optimized channel configurations comprising one channel configuration per digital twin instance of the multiple digital twin instances, wherein the method further comprises: selecting a channel configuration from the plurality of optimized channel configurations to be applied to the at least one access point, wherein the selection is based on a correlation between the plurality of channel configurations and one or more channels expected to be selected at the at least one access point.

According to a seventh aspect, there is provided the method of any of the first to sixth aspects, wherein the one or more optimized channel configurations are determined by using a reinforcement learning algorithm configured to: determine a set of channel selection actions for the plurality of access points; apply the set of channel selection actions to the digital twin approach selected; and determine the one or more optimized channel configurations based on one or more rewards resulting from each action of the set of channel selection actions applied to the digital twin approach selected, wherein the one or more rewards are related at least to the performance information.

According to an eighth aspect, there is provided the method of the seventh aspect, wherein the reinforcement learning algorithm is a Q-learning algorithm configured to follow an epsilon-greedy strategy for determining the one or more optimized channel configurations.

According to a ninth aspect, there is provided the method of the seventh or eighth aspect, wherein the one or more rewards comprise, for each action of the set of channel selection actions, a weighted combination of at least the following reward values: a global performance-based reward value common to the plurality of access points, wherein the global performance-based reward value is based on simulation results obtained from the digital twin approach selected, an individual performance-based reward value per access point of the plurality of access points, wherein the individual performance-based reward value is based on the simulation results obtained from the digital twin approach selected, a channel-pollution-based reward value per access point of the plurality of access points, wherein the channel-pollution-based reward value is related to channel pollution observed by the plurality of access points, and a channel reward value for incentivizing use of one or more pre-defined channels.

According to a tenth aspect, there is provided the method of the ninth aspect, wherein the global performance-based reward value is based on an average network throughput value for the plurality of access points according to the simulation results, and an average network airtime value for the plurality of access points according to the simulation results, and wherein the individual performance-based reward value is based on a number of times that an individual access point has been out of a pre-defined throughput range according to the simulation results, and a number of times that the individual access point has been out of a pre-defined airtime range according to the simulation results.

According to an eleventh aspect, there is provided the method of any of the first to tenth aspects, wherein the performance information comprises at least one of: throughput information, congestion information, or one or more received signal strength indicator values.

According to a twelfth aspect, there is provided an apparatus comprising means for performing the method of any of the first to eleventh aspects.

According to a thirteenth aspect, there is provided an apparatus comprising at least one processor, and at least one memory storing instructions that, when executed by the at least one processor, cause the apparatus to perform the method of any of the first to eleventh aspects.

According to a fourteenth aspect, there is provided a computer program comprising instructions which, when executed by an apparatus, cause the apparatus to perform the method of any of the first to eleventh aspects.

According to a fifteenth aspect, there is provided a computer readable medium comprising program instructions which, when executed by an apparatus, cause the apparatus to perform the method of any of the first to eleventh aspects.

According to a sixteenth aspect, there is provided a non-transitory computer readable medium comprising program instructions which, when executed by an apparatus, cause the apparatus to perform the method of any of the first to eleventh aspects.

BRIEF DESCRIPTION OF THE DRAWINGS

In the following, various example embodiments will be described in greater detail with reference to the accompanying drawings, in which

FIG. 1 illustrates an example of a system;
FIG. 2 illustrates a flow chart;
FIG. 3 illustrates an example of a Q-Table;
FIG. 4 illustrates a flow chart; and
FIG. 5 illustrates an example of an apparatus.

DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments within the scope of the claims. Furthermore, the words "comprising" and "including" should be understood as not limiting the described embodiments to consist of only those features that have been mentioned, and such embodiments may also contain features that have not been specifically mentioned. Reference numbers, in the description and/or in the claims, serve to illustrate the embodiments with reference to the drawings, without limiting the embodiments to these examples only.

A wireless local area network (WLAN) is a type of wireless network based on the Institute of Electrical and Electronics Engineers (IEEE) 802.11 standards. WLANs use wireless communication (i.e., radio signals) to connect devices within a limited area, such as a home, school, or office building. This allows users to move around within the coverage area while maintaining a network connection. A WLAN may include one or more access points (APs) for connecting the devices to the internet.

An access point is a device that allows terminal devices (e.g., smartphones, tablet computers, or printers) to connect to the wireless network. The access point acts as a central transmitter and receiver of wireless radio signals, facilitating communication between the devices and the internet, for example.

WLANs occupy a dominant position in the provision of wireless internet access. WLAN access points are widely and densely deployed in public places, offices and residential areas. However, there is a challenge in how to ensure that the deployed WLANs have enough capacity to meet the growing data traffic demands, given the significant increase in the amount of data traffic transmitted to and received from the internet. For example, mobility restrictions and the rise of teleworking have led to increased use and higher demands on communication networks (e.g., indoor WLANs).

A significant percentage of broadband customers' complaints are related to the quality of communications over WLANs. Many of these complaints and the customer perception can be improved by having WLANs properly configured and parameterized. The configuration and parameterization may change over time depending on the internal conditions of the network and the surrounding environment. For example, these changes may occur in networks that have been deployed by the users themselves.

Network operators may carry out network optimization based on indicators that reflect the state of the network in terms of lower layers within the overall communications scheme (e.g., data rate or network-level performance). The fundamentals of using optimization are based on improving the user experience. One way to verify that the network is optimized could be to record a reduction in customer calls to the service center. However, sometimes customer calls are not recorded, and the optimization metrics may not be based only on these indicators, but on how far the set of users is from being on the brink of falling into underperformance conditions.

Therefore, a better way to detect the risks of underperformance is to analyze the number of outliers in the network. Some services and applications may provide information enriched with geo-referenced data, user preferences and terminal measurements, thus generating large data sets that can be exploited for decision-making procedures, spectrum usage improvement mechanisms, as well as WLAN interference mitigation (both between elements of the same network and between neighboring networks). The large amount of available data cannot be easily manipulated by human means. Big Data and Artificial Intelligence (AI) mechanisms may be used to process the raw data, and thus find schemes, patterns, variables and behaviors that are difficult to obtain with other techniques (e.g., manually). This can improve the connectivity of different users, which is beneficial for leisure, work and educational activities in the community.

The increasing WLAN complexity coupled with uncoordinated deployment, distributed management, and network densification may negatively impact the operation of future 802.11 networks. In addition to that, it would be beneficial to improve the network performance in terms of global performance and also for outliers. Thus, there is a need for an optimization system that can take into account the potential network evolution over longer time periods and respond quickly. The optimization system should also be able to adapt the metrics to the specific network being optimized. However, currently, there are no optimization systems available for producing this kind of optimization.

Some example embodiments provide a method and a system for optimizing channel configurations for access points within a wireless network (e.g., WLAN) based on a digital twin of the wireless network. A digital twin of a wireless network is a virtual model that replicates the architecture, components, and state of an actual wireless network. The digital twin may mirror the network's configuration and behavior, allowing for analysis, optimization, and prediction of network performance under various scenarios.

It should be noted that WLAN is just one example of a wireless network, and the embodiments are not limited to WLAN. A person skilled in the art may also apply the solution to any other wireless communication networks or systems that are not centrally controlled and/or where resources are shared among different networks.

A channel refers to a medium for communication between access points and connected terminal devices. It includes an identification (i.e., identifier), a transmission power, a central frequency, and a specific frequency range within the radio spectrum that is used for communication between access points and the connected terminal devices. Each channel is a separate pathway that can carry data. For example, in WLANs, channels may be operating within the 2.4 gigahertz (GHz) and 5 GHz frequency bands.

A channel configuration refers to the specific settings and parameters assigned to a wireless communication channel used by access point(s) within the wireless network. For example, the channel configuration may indicate the channel frequency, bandwidth, and possibly other related settings to optimize network performance and minimize interference. Proper channel configuration helps to ensure efficient use of the available spectrum, reduces congestion, and improves overall network reliability and speed.

For example, some example embodiments may apply a machine learning algorithm (e.g., a reinforcement learning algorithm) on the digital twin for optimizing the channel configurations. Alternatively, any other suitable technique (e.g., a non-machine-learning-based algorithm) may be used for optimizing the channel configurations.

Since the deployment of the first generation of wireless communication systems, wireless technology has continuously evolved from supporting basic coverage to meeting more advanced needs. Machine learning is a key technique for artificial intelligence, capable of solving complex problems without the need for explicit programming.

However, the reliance on machine learning in wireless network environments without the support of a digital twin presents significant challenges. Testing directly on the real operational network may lead to performance degradation, as real-time adjustments and training can interfere with the quality of service. Therefore, the incorporation of a digital twin into a machine learning-based optimization system in wireless networks may be beneficial due to the inherent complexity and dynamism of these infrastructures.

One advantage of machine learning is its ability to learn useful information from the input data, which can help improve network performance. For example, spatial and sequential features can be extracted from the received signal strength indicator (RSSI).

Furthermore, machine learning-based resource, network and mobility management algorithms can adapt well to dynamic environments. Machine learning algorithms may achieve similar performance as legacy optimization algorithms, but with much lower complexity, thus making it possible to respond quickly to changes in the environment. In addition, reinforcement learning can achieve fast network control based on learned policies.

Moreover, machine learning helps to achieve the goal of network self-organization. Multi-agent reinforcement learning may be used, in which each node in the network can self-optimize its transmission power, channel allocation, etc.

In addition, by involving transfer learning, machine learning has the ability to quickly solve a new problem. In wireless communication systems, there are some temporal and spatial relevance, such as traffic loads between neighboring regions. Therefore, it is possible to transfer the knowledge acquired in one task to another relevant task, which may accelerate the learning process for the new task.

Reinforcement learning may be well suited to address specific challenges associated with the optimization and management of wireless networks. Wireless networks are highly dynamic and changing environments due to device mobility, interference, congestion, and other factors. Reinforcement learning is a powerful tool to adapt to these changes and learn continuously, allowing the network to automatically optimize itself based on changing conditions. In addition, reinforcement learning algorithms can learn decision policies that maximize network performance based on specific metrics and help achieve overall network performance improvement. Reinforcement learning algorithms are highly adaptable to different network environments and scenarios, since they can continuously adjust their decisions and policies to adapt to new network configurations, or changes in traffic load or Quality of Service (QoS) requirements.

One element of some reinforcement learning systems is the model of the environment. This is something that mimics the behavior of the environment or, more generally, allows inferences to be made about how the environment will behave. For example, given a state and an action, the model can predict the next resulting state and the next reward. Models may be used to plan, i.e., to decide on a course of action by taking into account possible future situations before they occur. Techniques for solving reinforcement learning problems that use models and planning are called model-based techniques, as opposed to the simpler model-free techniques that are explicitly trial-and-error learners. In other words, reinforcement learning may range from low-level trial-and-error learning to high-level deliberative planning.

The constant dynamism of networks may require real-time adaptability. The digital twin, by replicating the network environment virtually, provides an accurate and up-to-date representation for instantaneous adjustments. In addition, the introduction of a digital twin enables optimization with less intrusion into the real network, as testing and adjustments can be carried out virtually prior to deployment in the physical environment, minimizing potential adverse impacts. Likewise, for supporting reinforcement learning, the digital twin provides a secure and controlled environment to conduct thorough testing, accelerating the learning process and thus contributing to greater convergence of the optimization system. Together, the combination of machine learning and digital twin not only boosts operational efficiency, but also allows addressing the dynamic challenges of wireless networks with greater agility and accuracy.

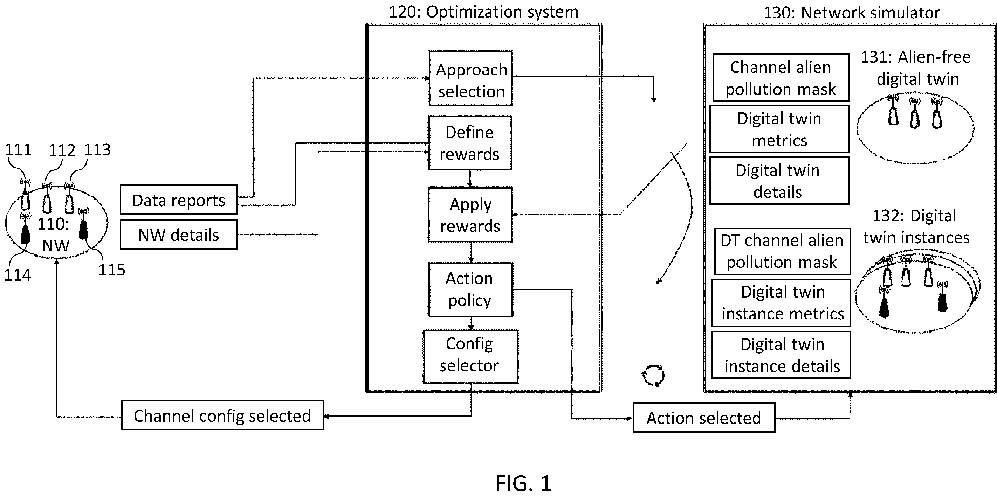

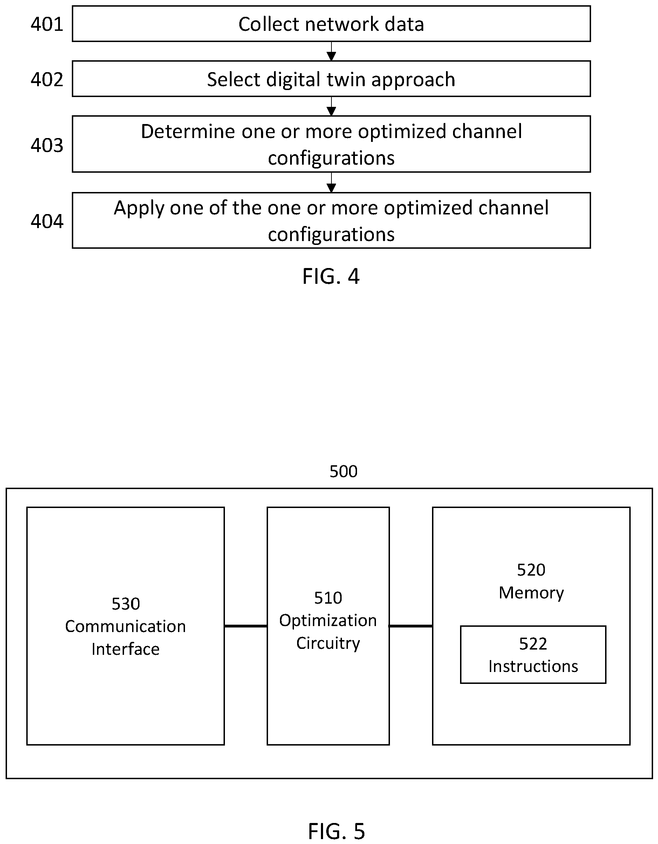

FIG. 1 illustrates an example embodiment of a system for optimizing a wireless network by utilizing a digital twin approach. For example, the optimization system 120 may be located in a cloud computing platform, or in an apparatus 500 depicted in FIG. 5.

Referring to FIG. 1, the optimization system 120 collects network data from a plurality of access points 111, 112, 113 (or a cluster of access points) within a wireless network (NW) 110, such as a wireless local area network. For example, the network data may comprise performance information (or performance metrics) of the plurality of access points 111, 112, 113. The plurality of access points 111, 112, 113 may periodically report the performance information to the optimization system 120.

The performance information refers to data that indicates how well a given access point 111, 112, 113 is functioning. For example, the performance information may comprise at least one of: throughput information, congestion information, or one or more received signal strength indicator (RSSI) values (e.g., as measured by the plurality of access points 111, 112, 113). Throughput refers to the amount of data successfully transmitted over the network in a given time period. Congestion refers to an overload condition when the data transmission demand for traffic exceeds channel capacity and, as a consequence, actual data transmission gets slowed down or even halted. The RSSI values indicate the power level of a received wireless signal.

The network data may further comprise network details reported by the plurality of access points 111, 112, 113, such as spatial information indicating a positioning of the plurality of access points 111, 112, 113, and/or channel information indicating one or more channels used by the plurality of access points 111, 112, 113.

The positioning information refers to data (e.g., geographic or spatial coordinates) that indicates the physical location of the access points 111, 112, 113 within the wireless network 110. The positioning information may be beneficial for optimizing network performance, as it helps in understanding the layout of the network, planning coverage areas, and managing interference and signal strength.

The channel information refers to data related to the specific frequency channels used by the access points 111, 112,113 within the wireless network 110. The channel information may be beneficial for optimizing the wireless network 110, as it helps in selecting the best channels that minimize interference and maximize performance. For example, the channel information may comprise at least one of the following details: channel number, frequency, bandwidth, or channel utilization. The channel number refers to the specific channel being used (e.g., Channel 1, Channel 6, or Channel 11 in the 2.4 GHz band). The frequency refers to the frequency range of the channel (e.g., 2.412 GHz for Channel 1). The bandwidth refers to the width of the channel. The channel utilization refers to the extent to which the channel is being used (e.g., including metrics like occupancy and interference levels).

The plurality of access points 111, 112, 113 may refer to access points that are controlled by the optimization system 120 and that may belong to a certain communications service provider (CSP). The plurality of access points 111, 112, 113 may also be referred to as controlled access points. Although three access points 111, 112, 113 are shown in FIG. 1, it should be noted that the number of access points may also be different than three. In other words, the plurality of access points may comprise two or more access points.

The plurality of access points 111, 112, 113 may experience interference from one or more other access points 114, 115. The one or more other access points 114, 115 may refer to access point(s) within the wireless network 110 that are not controlled by the optimization system 120 and from which no network data is collected. Alternatively, the one or more other access points 114, 115 may be part of a separate (neighboring) wireless network. The one or more other access points 114, 115 may belong to one or more other CSPs different from the CSP controlling the plurality of access points 111, 112, 113. Alternatively, the one or more other access points 114, 115 may belong to the same CSP that is controlling the plurality of access points 111, 112, 113. The one or more other access points 114, 115 may be identified by at least one (controlled) access point 111, 112, 113 reporting their presence. The one or more other access points 114, 115 may also be referred to as aliens or non-controlled access points. Although two non-controlled access points (aliens) 114, 115 are shown in FIG. 1, it should be noted that the number of non-controlled access points may also be different than two (i.e., one or more).

The optimization system 120 may also collect channel pollution information (or statistics) from the plurality of (controlled) access points 111, 112, 113, wherein the channel pollution information is indicative of: 1) channel interference from one or more neighboring (adjacent) channels on the one or more channels used by the plurality of (controlled) access points 111, 112, 113; and 2) channel occupancy observed by at least one of the plurality of (controlled) access points 111, 112, 113 on the one or more channels. The channel pollution information may also be referred to as a channel alien pollution mask.

The channel occupancy is measured as the signal power (or received signal strength) caused by any other access point(s) (e.g., the other controlled access points 111, 112, 113 and/or the non-controlled access points 114, 115), as observed by at least one of the plurality of (controlled) access points 111, 112,113 on the one or more channels. The effect of channel occupancy is mainly contention, but the channel can still be used by sharing the airtime between different access points. The airtime refers to the amount of time that a given access point occupies the communication channel to transmit or receive data.

Channel interference refers to the disruption or degradation of a wireless communication signal caused by overlapping or competing signals on neighboring (adjacent) channels (e.g., from signal leakage from the adjacent channels). In a wireless network, multiple access points may operate on the same frequency bands, leading to interference. This interference may result in reduced network performance, lower data throughput, increased latency, and/or connection instability. Usually, the channel interference may be smaller in magnitude compared to the channel occupancy.

The optimization system 120 processes the collected network data to determine the age of the network data. The age of the network data refers to the time elapsed since the network data was reported from the plurality of access points 111, 112, 113. Each access point 111, 112, 113 may generate a time stamp that is inserted in the report transmitted by that access point, wherein the time stamp indicates the date (e.g., year, month, day) and/or time (e.g., hour, minutes, seconds, milliseconds) when the time stamp is generated. Different access points 111, 112, 113 may transmit the reports at different time stamps, but with regular time intervals (e.g., every 15 minutes or every 24 hours). For example, if the reports are generated once a day during the rush hour, then the time stamp may indicate only the date, but not the time (in this case, the time stamps generated by different access points during the same day would be the same). The optimization system 120 may compare the time stamp with the current date and/or time (e.g., as indicated by an internal clock of the optimization system 120 or the cloud computing platform) to determine the age of the network data. For example, the age of the network data may be measured as the number of days since the reports were generated compared to the current date (a fraction of a day may also be considered as a day). If the network data includes multiple different time stamps (e.g., from different days), then the age of the network data may be determined, for example, by comparing the newest time stamp (from the last received report) to the current date and/or time, or by comparing the oldest time stamp (from the first received report) to the current date and/or time, or by comparing an average or median of the time stamps to the current date and/or time.

Based on the age of the collected network data, the optimization system 120 selects one of at least two pre-defined digital twin approaches 131, 132 for simulating the wireless network 110 in a network simulator 130. The network simulator 130 may also be run in the cloud computing platform or in the apparatus 500.

The at least two pre-defined digital twin approaches comprise at least: a first digital twin approach for simulating the wireless network using a digital twin that represents the plurality of (controlled) access points 111, 112, 113, and a second digital twin approach for simulating the wireless network 110 using multiple digital twin instances that represent the plurality of (controlled) access points 111, 112, 113 and the one or more other (non-controlled) access points 114, 115.

A digital twin instance refers to a specific version or replica of the digital twin. In the context of wireless networks, multiple digital twin instances can be created to represent different scenarios, configurations, or conditions of the wireless network 110. In other words, a digital twin refers to the overall virtual model, and digital twin instances are individual replicas used to explore and test different scenarios within that model.

Herein the terms "first digital twin approach" and "second digital twin approach" are used to distinguish the digital twin approaches, and they do not necessarily refer to any specific order of the digital twin approaches.

The first digital twin approach 131 may also be referred to as an alien-free digital twin, since it is a replica of the wireless network 110 that does not take into account the one or more other (non-controlled) access points 114, 115. The first digital twin approach may be used with updated hotspot traffic. The first digital twin approach 131 may be selected, if the network data is up-to-date (i.e., not too old). For example, the first digital twin approach 131 may be selected based on determining that the age of the network data is less than or equal to a threshold value (e.g., at most five days old). It should be noted that five days is just one example for the threshold value, and any other desired time period may alternatively be used as the threshold value.

The second digital twin approach 132, on the other hand, also takes into account the one or more other (non-controlled) access points 114, 115 (e.g., with an hourly traffic profile). The second digital twin approach 132 may be selected, if current network data is not available. For example, the second digital twin approach 132 may be selected based on determining that the age of the network data is greater than the threshold value (e.g., more than five days old). The second digital twin approach may require more computation time compared to the first digital twin approach, since multiple digital twin instances are simulated. When up-to-date network data is not available, multiple digital twin instances may be needed to obtain a more accurate approximation of the real network 110 (i.e., a single digital twin may not be enough in this case).

In FIG. 1, the digital twin details associated with the first digital twin approach 131 and the digital twin instance details associated with the second digital twin approach 132 refer to the properties of the different elements in the wireless network 110, such as the locations of the controlled access points 111, 112, 113 and/or non-controlled access points 114, 115 (e.g., X, Y, Z coordinates), channel settings, radio attenuation between different devices, traffic models used, etc. The digital twin metrics and digital twin instance metrics refer to the output values from the digital twin that are used for the optimization, such as average throughput of the different network elements (e.g., the access points 111, 112, 113) and/or the maximum capacity from any of the network elements, minimum capacity from any of the network elements, congestion, available airtime, used airtime, noise and interference, etc.

The optimization system 120 determines one or more optimized channel configurations for the plurality of (controlled) access points 111, 112, 113 based at least on the network data and the selected digital twin approach. In other words, one or more optimized channel configurations may be determined for each access point or for at least one access point of the plurality of access points 111, 112, 113.

There may be a feedback loop between the optimization system 120 and the network simulator 130, such that the optimization system 120 iteratively updates and refines the channel configurations based on the simulation results until the one or more optimized channel configurations are obtained.

The channel pollution information may also be utilized for determining the one or more optimized channel configurations. For example, based on selecting the first digital twin approach (i.e., if the network data is up-to-date), the optimization system 120 may determine to utilize the channel pollution information collected from the plurality of access points 111, 112, 113 for determining the one or more optimized channel configuration.

Alternatively, based on selecting the second digital twin approach (i.e., if the network data is outdated), the channel pollution information may be generated by simulating the wireless network 110 using the multiple digital twin instances that represent the plurality of access points 111, 112, 113 and the one or more other access points 114, 115. In other words, in this case, the channel pollution information (or statistics) may be collected from the digital twin instances (instead of collecting it from the real access points). The channel pollution information collected from the digital twin instances may also be referred to as a digital twin (DT) channel alien pollution mask.

For example, the one or more optimized channel configurations may be determined by using a reinforcement learning algorithm configured to: determine a set of channel selection actions for the plurality of access points; apply the set of channel selection actions to the digital twin approach selected; and determine the one or more optimized channel configurations based on one or more rewards resulting from each action of the set of channel selection actions applied to the digital twin approach selected.

The channel selection actions mean that the reinforcement learning algorithm selects channels among a set of candidate channels in each (virtual) access point of the plurality of access points 111, 112, 113 within the network simulator 130 (e.g., following an epsilon-greedy strategy). In other words, the actions that are selected are those pertaining to each (virtual) AP where it changes channels within the band following an action policy.

The optimization system 120 may define the one or more rewards and different weights for the reinforcement learning algorithm using the collected network data, depending on the type of optimization desired. Alternatively, at least a subset of the one or more rewards and/or the weights may be pre-defined or defined by a user (e.g., via a graphical user interface). For example, the one or more rewards may be related at least to the performance information, which may be included in the network data. The one or more rewards may also be related to the channel pollution information (i.e., the channel pollution information may be used to derive some reward(s)). The one or more rewards may be defined with the objective of improving performance and reducing the number of outliers, such that the action selected by a given (virtual) access point not only takes into account improving its performance but also reducing the number of outliers in the wireless network 110. The weights may be used to add more weight or relevance to some reward(s) compared to others (e.g., a higher weight may be added to throughput than for congestion).

The actions selected by the reinforcement learning algorithm are applied to the virtual representations of the access points 111, 112, 113 in the network simulator 130 to test various channel configurations using the digital twin. The digital twin also generates its own performance metrics (i.e., simulation results) and/or network details through the network simulator 130.

The one or more rewards are applied to the actions using the simulation results reported by the selected digital twin approach (and possibly by the channel alien pollution mask), thus generating a feedback loop between the optimization system 120 and the digital twin that results in the one or more optimized channel configurations. Once the algorithm converges, the channel configuration providing the highest reward(s) may be applied to (each of) the plurality of access points 111, 112, 113 (i.e., to the real network). In other words, a separate channel configuration may be determined and applied individually for each access point of the plurality of access points 111, 112, 113.

In case the second digital twin approach with the multiple digital twin instances was selected, then an optimized channel configuration may be received for each digital twin instance, thereby resulting in multiple channel configurations for each access point 111, 112, 113. In this case, a configuration selector may be used to select a single channel configuration to be applied to a given access point.

In other words, the one or more optimized channel configurations may comprise a plurality of optimized channel configurations determined for at least one access point of the plurality of access points 111, 112, 113 based on the second digital twin approach, the plurality of optimized channel configurations comprising one channel configuration per digital twin instance of the multiple digital twin instances. A channel configuration from the plurality of optimized channel configurations may be selected to be applied to the at least one access point, wherein the selection may be based on a correlation (or comparison) between the plurality of channel configurations and one or more channels expected to be selected at the at least one access point.

The "one or more channels expected to be selected at the at least one access point" refers to a competing local channel configuration of the at least one access point. Normally, an access point works autonomously and selects a locally optimal channel configuration. However, the optimization system 120 may impose a different channel configuration that is optimal for a larger area than just a single access point. The correlation ensures that the deviation between the autonomous local configuration and the centrally imposed configuration does not get too large. For example, the channel configuration that most closely matches the most likely local channel configuration (i.e., the channels that are most likely to be selected in each AP according to the channel information) may be selected by the configuration selector from the plurality of optimized channel configurations. In other words, the optimization system 120 may be configured to prefer channel configurations that minimize the number of channel changes at the APs with respect to the one or more channels originally used at the APs.

The optimization system 120 applies the selected channel configuration to (each of) the plurality of (controlled) access points 111, 112, 113 within the wireless network 110 to enhance network performance. In other words, a separate channel configuration may be selected and applied to each real access point 111, 112, 113.

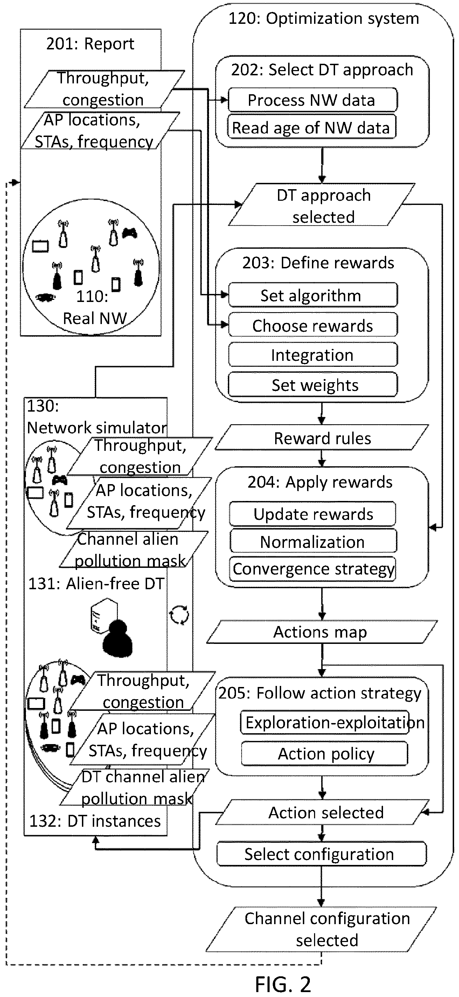

FIG. 2 illustrates a flow chart according to an example embodiment of a method for optimizing a wireless network by utilizing a digital twin approach. The method of FIG. 2 may be performed in a cloud computing platform or by an apparatus 500 depicted in FIG. 5. For example, the apparatus 500 may be, or comprise, or be comprised, a cloud server or any other computing device.

Referring to FIG. 2, in block 201, the optimization system 120 periodically collects reports, metrics and network details data (e.g., the network data described above) generated by the plurality of access points 111, 112, 113 within the wireless network 110.

In block 202, the network data is processed and the age of the network data is determined. Based on the age of the network data, a digital twin approach is selected from at least two pre-defined digital twin approaches 131, 132 for simulating the wireless network 110 in the network simulator 130.

The at least two pre-defined digital twin approaches comprise at least: a first digital twin approach 131 for simulating the wireless network 110 using a digital twin that represents the plurality of access points 111, 112, 113, and a second digital twin approach 132 for simulating the wireless network 110 using multiple digital twin instances that represent the plurality of access points 111, 112, 113 and one or more other access points 114, 115 from which no network data is collected.

In block 203, based on the network data, one or more rewards to be used in the optimization are defined and integrated, and specific optimization weights are selected.

In block 204, the one or more rewards are applied to the actions using the simulation results reported by the selected digital twin approach. As an example, the following three types of simulator data may be used to apply the one or more rewards: the channel pollution information (channel alien pollution mask), the performance information and the network details (e.g., the positioning information and the channel information).

If the age of the network data collected from the real network 110 is up-to-date (e.g., below a threshold value), then the channel pollution information (channel alien pollution mask) of the real wireless network 110 is provided, and metrics and reports of the updated alien-free digital twin (i.e., the first digital twin approach 131) are generated by the network simulator 130.

Alternatively, if the network data collected from the real network 110 is outdated (e.g., above the threshold value), then the second digital twin approach 132 is followed for generating multiple digital twin instances with the one or more other (non-controlled) access points 114, 115 (i.e., aliens) to get a more accurate approximation of the optimal solution. In this, case, the channel pollution information (channel alien pollution mask) as well as reports and metrics are generated by the network simulator 130 for each digital twin instance.

In block 205, after the application of the one or more rewards, a policy of actions is followed for each AP 111, 112, 113 to explore or exploit the channels in the band by selecting a specific channel and applying it to the corresponding digital twin. In this way, a loop is generated until the algorithm converges to obtain the one or more optimized channel configuration, one of which is then applied to each access point of the plurality of access points 111, 112, 113 within the real wireless network 110. For example, the one or more optimized channel configurations may be determined by using a reinforcement learning algorithm as mentioned above.

In one embodiment, the reinforcement learning algorithm may be a Q-learning algorithm configured to follow an epsilon-greedy strategy for determining the one or more optimized channel configurations.

The epsilon-greedy strategy is a technique used in reinforcement learning to balance exploration and exploitation when making decisions. Exploration means trying out new actions to discover their effects and potentially find better options. Exploitation means choosing the best-known action based on past experiences to maximize the rewards. In the epsilon-greedy strategy, a parameter called epsilon ($\varepsilon$) determines the balance between exploration and exploitation. With probability $\varepsilon$, the algorithm chooses a random action (exploration), and with probability $1 - \varepsilon$, it chooses the best-known action (exploitation). $\varepsilon$ may start with a higher value to encourage exploration and gradually decrease over time to favor exploitation as more information is gathered. This strategy helps the algorithm to learn optimal actions while still considering new possibilities.

The Q-Learning approach to reinforcement learning offers good scalability and is computationally efficient. For example, it may be suitable for applications that make changes in real time. The Q-Learning algorithm can handle stochastic environments while maintaining an up-to-date estimate. Within Q-Learning, an appropriate policy may be established to establish an optimal balance between exploration and exploitation of actions in a given environment. For this reason, the epsilon-greedy strategy may be beneficial, since it guarantees a constant exploration when proposing new actions. In addition, the epsilon-greedy strategy does not require complex calculations of probability distributions or uncertainty-based calculations, and allows the epsilon value to be adjusted to control the balance between exploration and exploitation. This provides flexibility to adapt to different scenarios and system preferences.

The Q-Learning algorithm uses a number of parameters for its operation. On the one hand, there are the agents that perform actions on an environment (e.g., the wireless network 110). The environment then returns a series of rewards that are stored in a table called a Q-Table, as well as states that form the new layout of the environment.

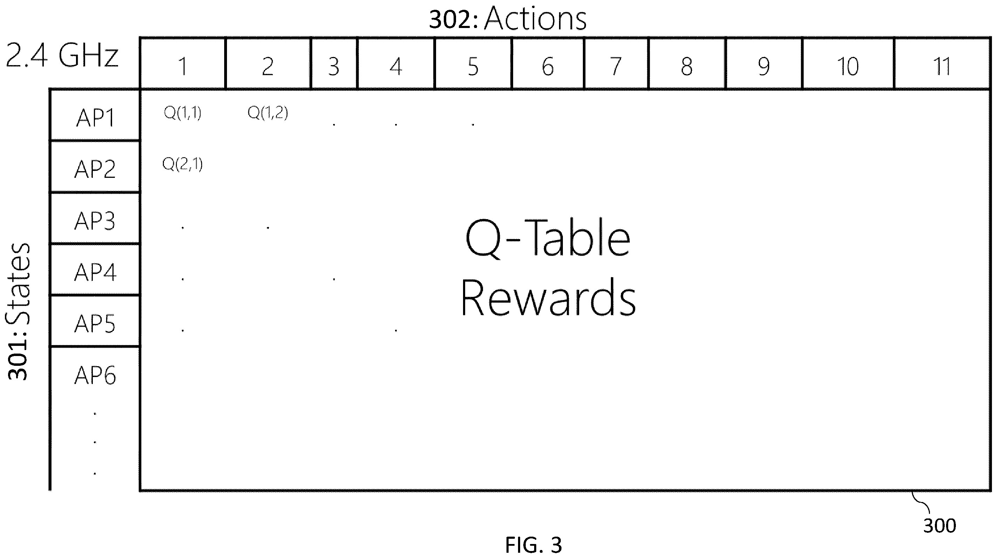

FIG. 3 illustrates an example of a Q-Table 300. The Q-Table 300 is formed by the states 301 of the environment and the possible actions 302 to be performed. In this case, the agent is the (virtual) AP that performs the channel selection action, and the states are the different (virtual) APs of the selected cluster to be optimized. Thus, the states are:

$$s_t = \{AP1 \dots APN\}$$

and the actions are:

$$a_t = \{channel\ 1 \ldots channel\ 11\}$$

In order to obtain the values of the Q-Table, one or more customized rewards supported by the digital twin may be defined. For example, the one or more rewards may comprise, for each action of the set of channel selection actions, a weighted combination of at least the following reward values: a global performance-based reward value (denoted as $global_{reward}$) common to the plurality of access points 111, 112, 113; an individual performance-based reward value (denoted as $indiv_{reward}$) per access point of the plurality of access points 111, 112, 113; a channel-pollution-based reward value (denoted as $aliens_{reward}$) per access point of the plurality of access points 111, 112, 113; and a channel reward value (denoted as $key_{channel}$) for incentivizing use of one or more pre-defined channels.

The global performance-based reward value and the individual performance-based reward values may be based on simulation results obtained from the digital twin approach selected. For example, the global performance-based reward value may be based on an average network throughput value for the plurality of access points 111, 112, 113 according to the simulation results, and an average network airtime value for the plurality of access points 111, 112, 113 according to the simulation results.

The individual performance-based reward value may, for example, be based on a number of times that an individual access point has been out of a pre-defined throughput range according to the simulation results, and a number of times that the individual access point has been out of a pre-defined airtime range according to the simulation results.

The channel-pollution-based reward value is related to channel pollution observed by the plurality of access points 111, 112, 113, as indicated by the channel pollution information.

These rewards values are described in further detail in the following.

The actions performed by each (virtual) AP may follow an epsilon-greedy strategy in which they select a random action, or the best possible action based on a value of $\varepsilon_t$:

$$\text{action at time (t) in state } (s_t)$$
$$= \begin{cases} \max Q_t(s_t, a_t) & , \quad \text{with probability } 1 - \epsilon_t \\ \text{random action } (s_t, a_t), & \quad \text{with probability } \epsilon_t \end{cases}$$

where:

$$\varepsilon_{decay} = 0.98$$
$$\varepsilon_{initial} = 1$$

$$\epsilon_t = \epsilon_{initial} \cdot \epsilon_{decay}$$

Once the (virtual) AP selects a given channel, the wireless network 110 with that new state is simulated in the digital twin. The network simulator 130 returns the figure of merit of the throughput and airtime of each AP. With these normalized throughput and airtime values, the $global_{reward}$ may be obtained for example as follows:

$$\overline{Th_{tot}} = \frac{Th_{AP_{mean}} - Th_{AP_{min}}}{Th_{AP_{max}} - Th_{AP_{min}}} \quad , \quad 0 < \overline{Th_{tot}} < 1$$

$$\overline{Air_{tot}} = \frac{Air_{AP_{mean}} - Air_{AP_{min}}}{Air_{AP_{max}} - Air_{AP_{min}}} \quad , \quad 0 < \overline{Air_{tot}} < 1$$

$$global_{reward} = g_1 \cdot \overline{Th_{tot}} - g_2 \cdot \overline{Air_{tot}} \quad , \quad 0 < global_{reward} < 1$$

where:

$\overline{Th_{tot}}$ = Average network throughput per AP normalized
$\overline{Air_{tot}}$ = Average network realized airtime per AP normalized
$Th_{AP_{mean}}$ = Average network throughput per AP
$Th_{AP_{min}}$ = Minimum network throughput per AP
$Th_{AP_{max}}$ = Maximum network throughput per AP

$Air_{APmean}$ = Average network realized airtime per AP
$Air_{AP_{min}}$ = Minimum network realized airtime per AP
$Air_{AP_{max}}$ = Maximum network realized airtime per AP
$g_1 \equiv$ Weight assigned to average network throughput
$g_2 \equiv$ Weight assigned to average network airtime

In addition, the individual reward per AP may also considered, for example by obtaining a reference value of airtime and throughput of the wireless network 110 with the initial configuration (before optimization). The APs that are below this throughput reference value and those above this airtime reference value may be counted for penalty to obtain the indiv$_{reward}$:

$$\overline{Th_{ind}} = \frac{NTh_{out} - NTh_{out_{min}}}{NTh_{out_{max}} - NTh_{out_{min}}} \qquad , \qquad 0 < \overline{Th_{ind}} < 1$$

$$\overline{Air_{ind}} = \frac{NAir_{out} - NAir_{out_{min}}}{NAir_{out_{max}} - NAir_{out_{min}}} \qquad , \qquad 0 < \overline{Air_{ind}} < 1$$

$$indiv_{reward} = i_1 \cdot \overline{Th_{ind}} - i_2 \cdot \overline{Air_{ind}} \qquad , \qquad 0 < indiv_{reward} < 1$$

where:

$\overline{Th_{ind}}$ = APs number out of throughput range normalized
$\overline{Air_{ind}}$ = APs number out of throughput range normalized
$NTh_{out}$ = APs number out of throughput range
$NTh_{out_{min}}$ = APs number minimum out of throughput range
$NTh_{out_{max}}$ = APs number maximum out of throughput range
$NAir_{out}$ = APs number out of airtime range
$NAir_{out_{min}}$ = APs number minimum out of airtime range
$NAir_{out_{max}}$ = APs number maximum out of airtime range
$i_1 \equiv$ Weight assigned to individual network throughput
$i_2 \equiv$ Weight assigned to individual network airtime

In addition to these figures of merit, the channel pollution (i.e., channel interference and channel occupancy) introduced by the one or more other (non-controlled) access points 114, 115 into each controlled AP 111, 112, 113 may also be taken into account. The channel pollution may be indicated by the channel pollution information (channel alien pollution mask) of the wireless network 110. For example, the channel-pollution-based reward value (aliens$_{reward}$) may be set at the maximum (e.g., to a value of 1), if there is more than a 10 decibel (dB) difference between the RSSI that the AP has from its stations (STAs), and the channel pollution that the AP observes or receives from the one or more other (non-controlled) APs 114, 115 in a given channel. A station (STA) refers to any device that has the capability to connect to a wireless network (e.g., laptops, smartphones, tablets, printers).

Thus, the aliens$_{reward}$ may be defined for example as:

$$\overline{A} = \frac{(RSSI_{AP} - RSSI_{alien}) - RSSI_{min}}{RSSI_{max} - RSSI_{min}} = \begin{cases} 1 & \text{if } (RSSI_{AP} - RSSI_{alien}) > 10 \text{ dB} \\ \overline{A} & \text{if } (RSSI_{AP} - RSSI_{alien}) \leq 10 \text{ dB} \end{cases}$$

$$aliens_{reward} = \overline{A} \qquad , \qquad 0 < indiv_{reward} < 1$$

where:

$RSSI_{alien}$ = Average RSSI alien per channel
$RSSI_{AP}$ = Average RSSI of STAs in the AP
$RSSI_{min}$ = Minimum RSSI difference of AP RSSI and alien RSSI
$RSSI_{max}$ = Maximum RSSI difference of AP RSSI and alien RSSI

Furthermore, a channel reward may be added for one or more pre-defined channels (e.g., channels 1, 6 and 11, since these are the only channels in the 2.4 GHz spectrum that have no frequency overlap). With this channel reward, APs can be incentivized to have a certain priority for the one or more pre-defined channels.

The rewards described above may be weighted and combined to form the total reward for example as follows:

$$r(s_t, a_t) = w_1 \cdot \text{global}_{\text{reward}} + w_2 \cdot \text{indiv}_{\text{reward}} + w_3 \cdot \text{aliens}_{\text{reward}} + w_4(\text{key}_{\text{channel}})$$

where:

$$w_1 + w_2 + w_3 + w_4 = 1$$

With the rewards defined in the optimization algorithm, different approaches to optimization can be pursued. For example, these approaches may comprise at least the following three different options: a first approach in which only channels 1, 6, and 11 are used when optimizing; a second approach where channels 1, 6, and 11 have some preference but other channels are also allowed be used; and a third approach where any channel (e.g., channels 1 to 11) can be used without any restriction. These channel range optimization approaches for the target APs may be defined by changing the reward weights for example as follows:

$$\mathbf{1, 6, 11} \begin{cases} w_1 = 0.25 \\ w_2 = 0.25 \\ w_3 = 0.25 \\ w_4 = 0.25 \end{cases} \quad \mathbf{1, 6, 11} \, \mathbf{\mathit{pref}}. \begin{cases} w_1 = 0.33 \\ w_2 = 0.33 \\ w_3 = 0.33 \\ w_4 = 0.01 \end{cases} \quad \mathbf{1 \, \mathit{to} \, 11} \begin{cases} w_1 = 0.33 \\ w_2 = 0.33 \\ w_3 = 0.33 \\ w_4 = 0.33 \end{cases}$$

This total reward together with the learning rate (e.g., $\alpha = 0.1$) and the discount factor (e.g., $\gamma = 0.9$), whose values may be obtained by experimentation, form the reward function:

$$Q(s, a) = (1 - \alpha) \cdot Q(s, a) + \alpha \cdot \big(r(s_t, a_t) + \gamma \cdot \max Q(s, a)\big)$$

Let $a_t$ be the action taken in state $s_t$, and $r_t$ be the reward received in state $s_t$, the Q-Learning algorithm converges if the following is satisfied:

$$a_{t-4} = a_{t-3} = a_{t-2} = a_{t-1} = a_t$$

$$r_{t-4} = r_{t-3} = r_{t-2} = r_{t-1} = r_t$$

FIG. 4 illustrates a flow chart according to an example embodiment of a method for optimizing a wireless network by utilizing a digital twin approach. The method of FIG. 4 may be performed in a cloud computing platform (e.g., by the optimization system 120) or by an apparatus 500 depicted in FIG. 5. For example, the apparatus 500 may be, or comprise, or be comprised, a cloud server or any other computing device.

Referring to FIG. 4, in block 401, network data is collected from a plurality of access points 111, 112, 113 within a wireless network 110, wherein the network data comprises at least one of: performance information of the plurality of access points 111, 112, 113, spatial information indicating a positioning of the plurality of access points 111, 112, 113, or channel information indicating one or more channels used by the plurality of access points 111, 112, 113. The wireless network 110 may be a wireless local area network (WLAN) or any other type of wireless network.

In block 402, based on the age of the network data, a digital twin approach is selected from at least two pre-defined digital twin approaches for simulating the wireless network 110.

The at least two pre-defined digital twin approaches comprise at least: a first digital twin approach 131 for simulating the wireless network 110 using a digital twin that represents the plurality of access points 111, 112, 113, and a second digital twin approach 132 for simulating the wireless network 110 using multiple digital twin instances that represent the plurality of access points 111, 112, 113 and one or more other access points 114, 115 from which no network data is collected.

For example, the first digital twin approach may be selected based on determining that the age of the network data is less than or equal to a threshold value.

As another example, the second digital twin approach may be selected based on determining that the age of the network data is greater than the threshold value.

In block 403, one or more optimized channel configurations are determined for (each of) the plurality of access points 111, 112, 113 based at least on the network data and the digital twin approach selected.

The one or more optimized channel configurations may be determined based further on channel pollution information indicative of: channel interference from one or more neighboring channels on the one or more channels used by the plurality of access points 111, 112, 113, and channel occupancy measured as signal power caused by the one or more other access points 114, 115 on the one or more channels used by the plurality of access points 111, 112, 113.

The channel pollution information may be collected from the plurality of access points 111, 112, 113 of the real wireless network 110. The channel pollution information collected from the plurality of access points may be utilized for determining the one or more optimized channel configurations, based on selecting the first digital twin approach.

Alternatively, based on selecting the second digital twin approach, the channel pollution information may be generated by simulating the wireless network 110 using the multiple digital twin instances that represent the plurality of access points 111, 112, 113 and the one or more other access points 114, 115.

For example, the one or more optimized channel configurations may be determined by using the reinforcement learning algorithm or Q-Learning algorithm described above. Alternatively, the one or more optimized channel configurations may be determined by using another type of machine learning algorithm (e.g., a supervised learning algorithm), or by using a non-machine-learning-based algorithm.

In block 404, one of the one or more optimized channel configurations is applied to (each of) the plurality of access points 111, 112, 113 within the wireless network 110.

The blocks, related functions, and information exchanges described above by means of FIG. 2 and FIG. 4 are in no absolute chronological order, and some of them may be performed simultaneously or in an order differing from the described one. Other functions can also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

FIG. 5 illustrates an example of an apparatus 500 comprising means for performing one or more of the example embodiments (e.g., the method of FIG. 2 or FIG. 4) described above. For example, the apparatus 500 may be, or comprise, or be comprised, a cloud server or any other computing device.

The apparatus 500 may comprise, for example, a circuitry or a chipset applicable for realizing one or more of the example embodiments described above. The apparatus 500 may be an electronic device or computing system comprising one or more electronic circuitries. The apparatus 500 may comprise an optimization circuitry 510 such as at least one processor, and at least one memory 520 storing instructions 522 which, when executed by the at least one processor, cause the apparatus 500 to carry out one or more of the example embodiments described above. Such instructions 522 may, for example, include computer program code (software). The at least one processor and the at least one memory storing the instructions may provide the means for providing or causing the performance of any of the methods and/or blocks described above.

The processor is coupled to the memory 520. The processor is configured to read and write data to and from the memory 520. The memory 520 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 520 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 520 or, alternatively or additionally, they may be received, by the apparatus, via an electromagnetic carrier signal and/or may be copied from a physical entity such as a computer program product. Execution of the computer readable instructions causes the apparatus 500 to perform one or more of the functionalities described above.

The memory 520 may be implemented using any suitable data storage technology, such as semiconductor-based memory devices, flash memory, magnetic memory devices and systems, optical memory devices and systems, fixed memory and/or removable memory.

The apparatus 500 may further comprise or be connected to a communication interface 530 comprising hardware and/or software for realizing communication connectivity according to one or more communication protocols. The communication interface 530 may comprise at least one transmitter (Tx) and at least one receiver (Rx) that may be integrated to the apparatus 500 or that the apparatus 500 may be connected to. The communication interface 530 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 530 provides the apparatus with communication capabilities to communicate with the wireless network 110. The communication interface 530 may, for example, provide a radio, cable or fiber interface to one or more access points 111, 112, 113 of the wireless network 110.

It is to be noted that the apparatus 500 may further comprise various components not illustrated in FIG. 5. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be graspable to a person skilled in the art that, as technology advances, the proposed concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

**Claims**

1. A method comprising:

    collecting (401) network data from a plurality of access points (111, 112, 113) within a wireless network (110), wherein the network data comprises at least one of: performance information of the plurality of access points (111, 112, 113), spatial information indicating a positioning of the plurality of access points (111, 112, 113), or channel information indicating one or more channels used by the plurality of access points (111, 112, 113) ;
    selecting (402), based on the age of the network data, a digital twin approach from at least two pre-defined digital twin approaches (131, 132) for simulating the wireless network (110),
    wherein the at least two pre-defined digital twin approaches (121, 132) comprise at least:

a first digital twin approach (131) for simulating the wireless network (110) using a digital twin that represents the plurality of access ponts (111, 112, 113), and

a second digital twin approach (13) for simulating the wireless network (110) using a multiple twin instances that represent the plurality of access points (111, 112, 113) and one or more other access points (114, 115);

determining (403) one or more optimized channel configurations for the plurality of acces points (111, 112, 113) based at least on the network data and the digital twin approach selected; and

applying (404) one of the one or more optimized channel configurations to the plurality of access points (111, 112, 113) within the wireless network (110).

2. The method of claim 1, wherein the first digital twin approach (131) is selected based on determining that the age of the network data is less than or equal to a theresold value or

wherein the second digital twin approach (132) is selected based on determining that the age of the network data is greater than the theresold value.

3. The method of claim 1 or 2, wherein the one or more optimized channel configurations are determined based further on channel pollution information indicative of:

channel interference from one or more neighboring channels on the one or more channels used by the plurality of access points (111, 112, 113) , and

channel occupancy measured as signal power observed by at least one of the plurality of access points (111, 112, 113) on the one or more channels.

4. The method of claim 3, further comprising:

collecting the channel pollution information from the plurality of access points (111, 112, 113); and

determining, based on selecting the first digital twin approach, to utilize the channel pollution information collected from the plurality of access points (111, 112, 113) for determining the one or more optimized channel configurations.

5. The method of claim 3, further comprising:
generating, based on selecting the second digital twin approach, the channel pollution information by simulating the wireless network (110) tusing the multiple digital twin instances that represent the plurality of access points (111, 112, 113) and the one or more other access points (114, 115).

6. The method of any preceding claim, wherein the one or more optimized channel configurations comprise a plurality of optimized channel configurations determined for at least one access point of the plurality of access points (111, 112, 113) based on the second digital twin approach (132), the plurality of optimized channel configurations comprising one channel configuration per digital twin instance of the multiple digital instances,

wherein the method further comprises:

selecting a channel configuration from the plurality of optimized channel configurations to be applied to the at least one access point, wherein the selection is based on a correlation between the plurality of channel configurations and one or more channels expected to be selected at the at least one access point.

7. The method of any preceding claim, wherein the one or more optimized channel configurations are determined by using a reinforcement learning algorithm configured to:

determine a set of channel selection actions for the plurality of access points (111, 112, 113);

apply the set of channel selection action to the digital twin approach selected; and

determine the one or more optimized channel configurations based on one or more rewards resulting from each action of the set of channel selection action applied to the digital twin approach selected,

wherein the one or more rewards are related at least to the performance information.

8. The method of claim 7, wherein the reinforcement learning algorithm is a Q-learning algorithm configured to follow an epsilon-greedy strategy for determining the one or more optimized channel configurations.

9. The method of claim 7 or 8, wherein the one or more reward comprise, for each action of the set of channel selection actions, a weighted combination of at least the following reward values:

a global performance-based reward value common to the plurality of access points (111, 112, 113), wherein the global performance-based reward value is based on simulation results obtained from the digital twin approach selected,

an individual performance-based reward value per access point of the plurality of access points (111, 112, 113), wherein the individual performance-based reward value is based on the simulation results obtained from the digital twin approach selected,

a channel-pollution-based reward value per access point of the plurality of access points (111, 112, 113), wherein the channel-pollution-based reward value is related to channel pollution observed by the plurality of access points (111, 112, 113), and

a channel reward value for incentivizing use of one or more pre-defined channels.

10. The method of claim 9, wherein the global performance-based reward value is based on the average network throughput value for the plurality of access points (111, 112, 113) according to the simulation results, and an average network airtime value fot the plurality of access points (111, 112, 113) according to the simulation results, and wherein the individual performance-based reward is based on a number of times that an individual access point has been out of a pre-defined,throughput range according to the simulation results, and a number of times that the individual acces point has been out of a pre-defined airtime range according to the simulation results.

11. The method of any preceding claim, wherein the performance information comprises at least one of: throughput information, congestion information, or one or more received signal strenght indicator values.

12. An apparatus (500) comprising:

means for collecting network data from a plurality of access points (111, 112, 113) within a wireless network (110), wherein the network data comprises at least one of: performance information of the plurality of access points (111, 112, 113), spatial information indicating one or more channels used by the plurality of access points (111, 112, 113);

means for selecting, based on the age of the network data, a digital twin approach from at least two pre-defined digital twin approaches (131, 132) for simulating the wireless network (110), wherein the at least two pre-defined digital twin approaches (131, 132) comprise at least:

a first digital twin approach (131) for simulating the wireless network (110) using a digital twin that represents the plurality of access points (111, 112, 113) , and

a second digital twin approach (132) for simulating the wireless network (110) using multiple digital twin instances that represent the plurality of access points (111, 112, 113) and one or more other access points (114, 115);

means for determining one or more optimized channel configurations for the plurality of access points (111, 112, 113) based at least on the network data and the digital twin approach selected; and

means for applying one of the one or more optimized channel configurations to the plurality of acces points (111, 112, 113) within the wireless network (110).

13. The apparatus of claim 12, wherein the means for selecting the digital twin approach are configured to:

selecting the first digital twin approach (131) based on determining that the age of the network data is lower than or equal to a theresold value, or

selecting the second digital twin approach (132) based on determining that the age of the network data is higher than or equal to a theresold value,

FIG. 1

**120: Optimization system**

**201: Report**

Throughput, congestion

AP locations, STAs, frequency

110: Real NW

**202: Select DT approach**

Process NW data

Read age of NW data

DT approach selected

**203: Define rewards**

Set algorithm

Choose rewards

Integration

Set weights

**130: Network simulator**

Throughput, congestion

AP locations, STAs, frequency

Channel alien pollution mask

**131: Alien-free DT**

Reward rules

**204: Apply rewards**

Update rewards

Normalization

Convergence strategy

Actions map

Throughput, congestion

AP locations, STAs, frequency

DT channel alien pollution mask

**132: DT instances**

**205: Follow action strategy**

Exploration-exploitation

Action policy

Action selected

Select configuration

Channel configuration selected

FIG. 2

**302: Actions**

| 2.4 GHz | 1 | 2 | 3 | 4 | 5 | 6 | 7 | 8 | 9 | 10 | 11 |
|---|---|---|---|---|---|---|---|---|---|---|---|
| AP1 | Q(1,1) | Q(1,2) | . | . | . | | | | | | |
| AP2 | Q(2,1) | | | | | | | | | | |
| AP3 | . | . | | | | | | | | | |
| AP4 | . | | . | | | | | | | | |
| AP5 | . | | . | | | | | | | | |
| AP6 | | | | | | | | | | | |

**301: States**

Q-Table
Rewards

300

FIG. 3

| 401 | Collect network data |
|---|---|
| 402 | Select digital twin approach |
| 403 | Determine one or more optimized channel configurations |
| 404 | Apply one of the one or more optimized channel configurations |

FIG. 4

500

| 530 Communication Interface | 510 Optimization Circuitry | 520 Memory |
|---|---|---|
| | | 522 Instructions |

FIG. 5

# EUROPEAN SEARCH REPORT

**Application Number**

EP 24 38 3294

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/058736 A1 (BTS KURUMSAL BILISIM TEKNOLOJILERI ANONIM SIRKETI [TR]) 21 March 2024 (2024-03-21) * page 1, line 5 - page 2, line 3 * * page 3, line 30 - page 5, line 24 * * page 7, line 1 - page 10, line 28 * ----- | 1-15 | INV. H04W24/02 ADD. H04W24/10 H04W84/12 H04W88/08 |
| A | WO 2024/025450 A1 (ERICSSON TELEFON AB L M [SE]) 1 February 2024 (2024-02-01) * paragraph [0067] * * figure 5 * ----- | 1-15 | |
| A | \'ALVARO L\'OPEZ-RAVENT\'OS ET AL: "Concurrent Decentralized Channel Allocation and Access Point Selection using Multi-Armed Bandits in multi BSS WLANs", ARXIV.ORG, CORNELL UNIVERSITY LIBRARY, 201 OLIN LIBRARY CORNELL UNIVERSITY ITHACA, NY 14853, 5 June 2020 (2020-06-05), XP081692108, * abstract * * paragraph 1 * ----- | 1-15 | |
| A | SZYMON SZOTT ET AL: "Wi-Fi Meets ML: A Survey on Improving IEEE 802.11 Performance with Machine Learning", ARXIV.ORG, CORNELL UNIVERSITY LIBRARY, 201 OLIN LIBRARY CORNELL UNIVERSITY ITHACA, NY 14853, 6 October 2022 (2022-10-06), XP091335323, DOI: 10.1109/COMST.2022.3179242 * abstract * * Section I * ----- | 1-15 | TECHNICAL FIELDS SEARCHED (IPC) H04W H04L |

The present search report has been drawn up for all claims

| Place of search | Date of completion of the search | Examiner |
|---|---|---|
| Munich | 14 May 2025 | Ruscitto, Alfredo |

EPO FORM 1503 03.82 (P4C01)

**EP 4 753 316 A1**

## ANNEX TO THE EUROPEAN SEARCH REPORT
## ON EUROPEAN PATENT APPLICATION NO.

EP 24 38 3294

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2025

| Patent document cited in search report | Publication date | Patent family member(s) | | Publication date |
|---|---|---|---|---|
| WO 2024058736 A1 | 21-03-2024 | TR | 2022014285 A2 | 21-10-2022 |
| | | US | 2024430697 A1 | 26-12-2024 |
| | | WO | 2024058736 A1 | 21-03-2024 |
| WO 2024025450 A1 | 01-02-2024 | EP | 4562549 A1 | 04-06-2025 |
| | | WO | 2024025450 A1 | 01-02-2024 |

For more details about this annex : see Official Journal of the European Patent Office, No. 12/82